Europäisches Patentamt

European Patent Office

Office européen des brevets

(11) Veröffentlichungsnummer: **0 358 204**

**A1**

## EUROPÄISCHE PATENTANMELDUNG

(21) Anmeldenummer: 89116483.2

(22) Anmeldetag: 07.09.89

(51) Int. Cl.5: **G05D 1/06 , G05D 1/08 , G01P 5/00**

(30) Priorität: 09.09.88 DE 3830635

(43) Veröffentlichungstag der Anmeldung:
14.03.90 Patentblatt 90/11

(84) Benannte Vertragsstaaten:
**DE ES FR GB IT SE**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Krogmann, Uwe**
**Zur Asche 24**
**D-7770 Überlingen Nussdorf(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Flugdatengeber.**

(57) Ein Flugdatengeber zur Erzeugung von Anstellwinkel-, Schiebewinkel- und Fluggeschwindigkeitssignalen, enthält Flugdatensensoren (16), welche Sensorsignale nach Maßgabe des Anstellwinkels. des Schiebewinkels und der Fluggeschwindigkeit liefern, und Koordinatentransformationsmittel (18), auf welche die Sensorsignale aufgeschaltet sind und durch welche die Fluggeschwindigkeit nach Maßgabe der Anstell- und Schiebewinkel als flugzeugbezogener Fluggeschwindigkeitsvektor in ein flugzeugfestes Koordinatensystem transformierbar ist. Es ist eine Vorrichtung (22) vorgesehen zur Kontrolle der Flugdatensensoren (16) auf Verfügbarkeit und Gültigkeit, welche bei einer Störung von Flugdatensensoren (16) ein Steuersignal liefert. Bei Ansprechen der besagten Vorrichtung wird der vor der Störung gemessene, flugzeugbezogenen Fluggeschwindigkeitsvektor festgehalten. Die Änderungen des inertialen Geschwindigkeitsvektors werden zu dem festgehaltenen, flugzeugbezogenen Geschwindigkeitsvektor addiert. Es ergibt sich dann ein Schätzwert des Fluggeschwindigkeitsvektors. Signale, welche Schätzwerte des Anstellwinkels und des Schiebewinkels darstellen, werden aus dem Schätzwert des flugzeugbezogenen Fluggeschwindigkeitsvektors gebildet.

## Flugdatengeber mit Notbetrieb

### Technisches Gebiet

Die Erfindung betrifft einen Flugdatengeber zur Erzeugung von Anstellwinkel-, Schiebewinkel und Fluggeschwindigkeitssignalen, enthaltend

(a) Flugdatensensoren, welche Sensorsignale nach Maßgabe des Anstellwinkels, des Schiebewinkels und der Fluggeschwindigkeit liefern,

(b) Koordinatentransformationsmittel, auf welche die Sensorsignale aufgeschaltet sind und durch welche die Fluggeschwindigkeit nach Maßgabe der Anstell- und Schiebewinkel als flugzeugbezogener Fluggeschwindigkeitsvektor in ein flugzeugfestes Koordinatensystem transformierbar ist,

(d) Mittel zur Bildung eines Schätzwertes des flugzeugbezogenen Fluggeschwindigkeitsvektors unter Benutzung eines inertialen Geschwindigkeitsvektors und

(e) Mittel zur Erzeugung von Signalen, welche Schätzwerte des Anstellwinkels und des Schiebewinkels darstellen, aus dem Schätzwert des flugzeugbezogenen Fluggeschwindigkeitsvektors.

### Zugrundeliegender Stand der Technik

Durch die EP-A2-0 263 777 ist ein Flugdatengeber bekannt, der dazu dient, bei Ausfall von Flugdatensensoren für eine gewisse Zeit noch Schätzwerte für die Flugdaten Fluggeschwindigkeit (True Airspeed), Anstellwinkel und Schiebewinkel zu liefern.

Diese Flugdaten sind auf den Flugregler des Flugzeugs aufgeschaltet und für die Funktion des Flugreglers zur Stabilisierung des Flugzeuges wesentlich. Ein Ausfall von Flugdatensensoren ist daher ganz besonders kritisch bei Flugzeugen geringer Eigenstabilität, für welche das Funktionieren des Flugreglers lebenswichtig ist. Trägheitssensoren wie Kreisel und Beschleunigungsmesser sind aus diesem Grunde redundant vorgesehen, so daß bei Ausfall eines Trägheitssensors andere Trägheitssensoren die Funktion aufrechterhalten. Einer Vermehrfachung von Flugdatensensoren sind jedoch häufig aus geometrischen Gründen Grenzen gesetzt, so daß der geforderte Sicherheitsgrad auf diese Weise nicht erreichbar ist.

In dem Flugzeug ist eine aus Beschleunigungsmessern und Kreiseln aufgebaute, hochzuverlässige Inertialmeßeinheit (IMU) vorgesehen, die Fluglagewinkel und auch eine inertial gemessene Geschwindigkeit liefert, also die Lage und Geschwindigkeit des Flugzeugs gegenüber dem inertialen Raum. Durch Vermehrfachung der Sensoren hat diese Inertialmeßeinheit den erforderlichen Grad von Zuverlässigkeit. Weiterhin ist in dem Flugzeug eine hochgenaue Trägheitsnavigationsanlage (INS) vorgesehen, die ebenfalls eine inertiale Geschwindigkeit liefert.

Nach der EP-A2-0263 777 wird die Inertialmeßeinheit benutzt, um bei einem Ausfall eines Flugdatensensors für eine begrenzte Zeit, die zur Landung ausreichen kann, Schätzwerte für die Flugdaten zu gewinnen. Zu diesem Zweck wird laufend anhand der gemessenen Anstell- und Schiebewinkel die Fluggeschwindigkeit (True Airspeed) in ein flugzeugfestes Koordinatensystem transformiert. Es wird so ein flugzeugbezogener Fluggeschwindigkeitsvektor erhalten. Aus dem inertialen Geschwindigkeitsvektor der Inertialmeßeinheit und dem inertialen Geschwindigkeitsvektor der Trägheitsnavigationsanlage (INS) wird durch ein Optimalfilter ein Schätzwert für den inertialen Geschwindigkeitsvektor gewonnen, der durch eine Koordinatentransformation ebenfalls in ein flugzeugfestes Koordinatensystem transformiert wird. Aus der Differenz des flugzeugbezogenen Fluggeschwindigkeitsvektors und des inertialen Geschwindigkeitsvektors wird ein Windvektor gebildet und laufend auf ein Register gegeben. Aus diesem Windvektor und dem Schätzwert des inertialen Geschwindigkeitsvektors werden die Schätzwerte für Anstell- und Schiebewinkel und für die Fluggeschwindigkeit gewonnen. Im Normalbetrieb werden diese Schätzwerte zur Überprüfung des beschriebenen Kreises verwendet. Dadurch wird sichergestellt, daß in dem Register tatsächlich ständig der Vektor der Windgeschwindigkeit gespeichert ist.

Bei Ausfall eines Flugdatensensors werden die zuletzt vor dem Ausfall in das Register eingelesenen Komponenten des Windvektors festgehalten. Der Flugregler wird von den Schätzwerten der Flugdaten beaufschlagt. Es wird dabei angenommen, daß sich der Windvektor während dieses "Notbetriebes" nicht ändert.

In einem Aufsatz von Wüst "Probleme der Messung von Windgrößen mit bordüblichen Sensoren" in "Zeitschrift für Flugwissenschaft und Weltraumforschung" 2 (1978),387-394 ist beschrieben, wie Windeinflüsse anhand von sowieso vorhandenen Trägheitssensoren bestimmt werden können. Diese Windeinflüsse werden bei der Flugregelung in Form einer Störgrößenaufschaltung also einer der Regelung überlagerten Steuerung, berücksichtigt.

Die US-A-3 448 948 und die US-A-3 955 071 beschreiben die Erfassung von Böen derart, daß diese nicht zu einer unnötigen Schubunruhe führen.

## Offenbarung der Erfindung

Der Erfindung liegt die Aufgabe zugrunde, einen Flugdatengeber der eingangs definierten Art mit einfachen Mitteln aufzubauen.

Erfindungsgemäß wird diese Aufgabe gelöst durch

(f) eine Vorrichtung zur Kontrolle der Flugdatensensoren auf Verfügbarkeit und Gültigkeit, welche bei einer Störung von Flugdatensensoren ein Steuersignal liefert,

(g) Mittel zum Festhalten des bei Ansprechen der besagten Vorrichtung vor der Störung gemessenen flugzeugbezogenen Fluggeschwindigkeitsvektors und

(h) Mittel zur Addition der Änderungen des inertialen Geschwindigkeitsvektors zu dem festgehaltenen, flugzeugbezogenen Geschwindigkeitsvektor.

Es wird auch bei diesem Flugdatengeber angenommen, daß der Windvektor im wesentlichen konstant bleibt. Der Flugdatengeber geht jedoch nicht den Umweg über die Bestimmung und Speicherung dieses konstanten Windvektors. Vielmehr wird der letzte Wert des Fluggeschwindigkeitsvektors vor Ausfall der Flugdatensensoren festgehalten. Ausgehend von diesem Wert des Fluggeschwindigkeitsvektors werden zu diesem die Änderungen der inertialen Geschwindigkeit addiert, die vorzugsweise allein von einer Inertialmeßeinheit ohne Rückgriff auf die Trägheitsnavigationsanlage geliefert werden. Es ergeben sich dabei auf sehr einfache Weise der Schätzwert für den flugzeugbezogenen Fluggeschwindigkeitsvektor, aus dem die Schätzwerte für die Flugdaten gewonnen werden können.

Ein Ausführungsbeispiel der Erfindung ist nachstehend unter Bezugnahme auf die zugehörige Zeichnung näher erläutert.

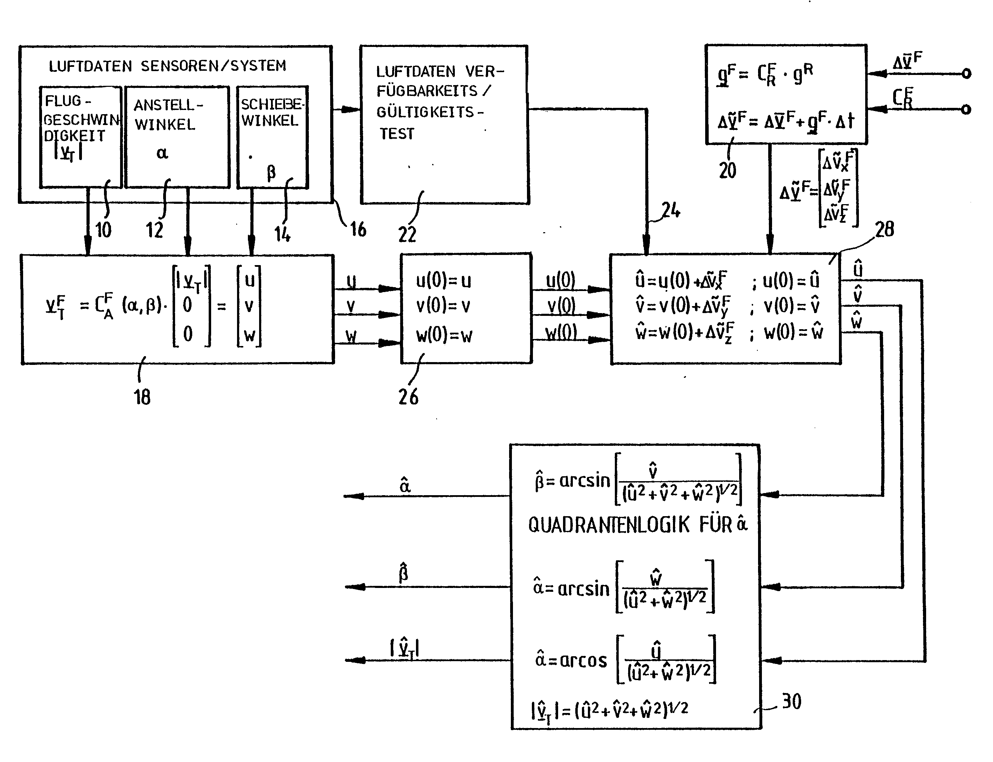

## Kurze Beschreibung der Zeichnung

Die Zeichnung ist ein Blockdiagramm eines Flugdatengebers, bei welchem nach Ausfall der Flugdatensensoren Schätzwerte der Flugdaten unter Benutzung der von einer Inertialmeßeinheit gelieferten inertialen Geschwindigkeitsänderungen gewonnen werden.

## Bevorzugte Ausführung der Erfindung

In der Figur ist mit 10 ein Fluggeschwindigkeitssensor bezeichnet, der ein dem Absolutbetrag der Fluggeschwindigkeit entsprechendes Signal liefert. Ein Anstellwinkelsensor 12 liefert ein den Anstellwinkel des Flugzeugs wiedergebendes Signal. Ein Schiebewinkelsensor 14 liefert ein den Schiebewinkel ß wiedergebendes Signal. Der Fluggeschwindigkeitssensor 10, der Anstellwinkelsensor 12 und der Schiebewinkesensor 14, die ggf. vermehrfacht vorgesehen sind, bilden zusammen mit den zugehörigen Signalaufbereitungsmitteln die Flugdatensensor 16, der in der Figur als Block dargestellt ist. Die Signale von dem Flugdatensensor werden einer Koordinatentransformation unterworfen, wie durch Block 18 dargestellt ist. Dabei wird die Fluggeschwindigkeit (True Airspeed) nach Maßgabe von Anstellwinkel $\alpha$ und Schiebewinkel ß in ein flugzeugfestes Koordinatensystem transformiert. Es wird so ein flugzeugbezogener Fluggeschwindigkeitsvektor $v_T{}^F$ mit den Komponenten u,v und w erhalten. Eine Inertialmeßeinheit 20, die nach Art der EP-A2-0263 777 ausgebildet sein kann, liefert inertiale Geschwindigkeitsinkremente, welche die Änderung der Geschwindigkeit des Flugzeuges gegenüber dem inertialen Raum bezogen auf ein flugzeugfestes Koordinatensysten wiedergeben. Diese Geschwindigkeitsinkremente sind mit $\Delta v^F$ bezeichnet.

Eine Vorrichtung 22 zur Kontrolle der Flugdatensensoren 16 auf Verfügbarkeit und Gültigkeit der Flugdaten liefert bei einer Störung der Flugdatensensoren 16 ein Steuersignal. Das ist durch die mit einem Pfeil versehene Linie 24 angedeutet. Wenn diese Vorrichtung 22 anspricht, also die Flugdatensensoren 16 ausfallen oder einer der Sensoren 10,12 oder 14 ausfällt oder ein ungültiges Signal liefert, dann wird der letzte vor dem Ausfall gemessene Fluggeschwindigkeitsvektor mit den Komponenten u(0), v(0) und w(0) in einem Speicher 26 gespeichert. Es werden dann aus den so gespeicherten Komponenten und den Geschwindigkeitsinkrementen $\Delta v^F$ Schätzwerte $\hat{u},\hat{v},\hat{w}$ für die Komponenten des Fluggeschwindigkeitsvektors gebildet, und zwar nach folgendem Algorithmus

$$\hat{u} = u(0) + \Delta \tilde{v}{}^F_x \; ; \; u(0) = \hat{u}$$
$$\hat{v} = v(0) + \Delta \tilde{v}{}^F_y \; ; \; v(0) = \hat{v}$$
$$\hat{w} = w(0) + \Delta \tilde{v}{}^F_z \; ; \; w(0) = \hat{w}$$

Aus z.B. u(0) und $\Delta v_x{}^F$ wird in einem ersten Rechenschritt nach Gleichung (1) ein erster Schätzwert $\hat{u}$ gebildet. Für den nächsten Rechenschritt wird dieser erste Schätzwert $\hat{u}$ als u(0) in Gleichung (1) eingegeben, so daß in Verbindung mit dem nächsten Geschwindigkeitsinkrement $\Delta v_x{}^F$ ein zweiter Schätzwert gewonnen wird, usw. Es wird so ein Schätzwert des Fluggeschwindigkeitsvektors erhalten. Die Änderungen dieses Fluggeschwindigkeitsvektors werden als gleich den Änderungen des inertialen Geschwindigkeitsvektors angenommen. Es wird also angenommen, daß sich der Windvektor in der Zeit nach Ausfall der Flugdatensensoren 16 nicht wesentlich ändert. Das trifft im allgemeinen wenigstens für einige Zeit zu. Diese Signalverarbeitung ist durch Block 28 dargestellt.

Aus den Komponenten u,v,w des so erhaltenen Schätzwertes des flugzeugbezogenen Fluggeschwindigkeitsvektors können Signale gewonnen werden, welche Schätzwerte der Fluggeschwindigkeit, des Anstellwinkels $\alpha$ und des Schiebewinkels $\beta$ wiedergeben. Das geschieht in einem Rechner nach folgendem Algorithmus:

$$\hat{\beta} = \arcsin\left[\frac{\hat{v}}{(\hat{u}^2+\hat{v}^2+\hat{w}^2)^{1/2}}\right]$$

$$\hat{\alpha} = \arcsin\left[\frac{\hat{w}}{(\hat{u}^2+\hat{w}^2)^{1/2}}\right]$$

$$\hat{\alpha} = \arccos\left[\frac{\hat{u}}{(\hat{u}^2+\hat{w}^2)^{1/2}}\right]$$

$$|\hat{\underline{v}}_T| = (\hat{u}^2+\hat{v}^2+\hat{w}^2)^{1/2}$$

Dieser Algorithmus ist durch Block 30 dargestellt. Die so gewonnenen Signale für Fluggeschwindigkeit, Anstellwinkel und Schiebewinkel beaufschlagen den Flugregler. Dadurch kann der Flugregler noch für eine Zeit funktionsfähig bleiben und das Flugzeug stabilisieren, die in den meisten Fällen noch zu einer Landung ausreicht.

**Ansprüche**

1. Flugdatengeber zur Erzeugung von Anstellwinkel-, Schiebewinkel und Fluggeschwindigkeitssignalen, enthaltend (a) Flugdatensensoren (16), welche Sensorsignale nach Maßgabe des Anstellwinkels. des Schiebewinkels und der Fluggeschwindigkeit liefern, (b) Koordinatentransformationsmittel (18), auf welche die Sensorsignale aufgeschaltet sind und durch welche die Fluggeschwindigkeit nach Maßgabe der Anstellund Schiebewinkel als flugzeugbezogener Fluggeschwindigkeitsvektor in ein flugzeugfestes Koordinatensystem transformierbar ist, (d) Mittel zur Bildung eines Schätzwertes des flugzeugbezogenen Fluggeschwindigkeitsvektors unter Benutzung eines inertialen Geschwindigkeitsvektors und (e) Mittel (30) zur Erzeugung von Signalen, welche Schätzwerte des Anstellwinkels und des Schiebewinkels darstellen, aus dem Schätzwert des flugzeugbezogenen Fluggeschwindigkeitsvektors.

**gekennzeichnet durch**

(f) eine Vorrichtung (22) zur Kontrolle der Flugdatensensoren (16) auf Verfügbarkeit und Gültigkeit, welche bei einer Störung von Flugdatensensoren (16) ein Steuersignal liefert,

(g) Mittel (26) zum Festhalten des bei Ansprechen der besagten Vorrichtung vor der Störung gemessenen flugzeugbezogenen Fluggeschwindigkeitsvektors und

(h) Mittel (28) zur Addition der Änderungen des inertialen Geschwindigkeitsvektors zu dem festgehaltenen, flugzeugbezogenen Geschwindigkeitsvektor.

2. Flugdatengeber nach Anspruch 1 oder 2, **dadurch gekennzeichnet, daß** der inertiale Geschwindigkeitsvektor ausschließlich von einer Inertialmeßeinheit (20) geliefert wird.

LUFTDATEN SENSOREN/SYSTEM

| FLUG-GESCHWIN-DIGKEIT $|\underline{v}_T|$ | ANSTELL-WINKEL $\alpha$ | SCHIEBE-WINKEL $\beta$ |
|---|---|---|

10   12   14   16

LUFTDATEN VER-FÜGBARKEITS / GÜLTIGKEITS-TEST

22

$$\underline{g}^F = C_R^F \cdot \underline{g}^R$$

$$\Delta \underline{\tilde{v}}^F = \Delta \underline{\bar{v}}^F + \underline{g}^F \cdot \Delta t$$

$\Delta \underline{\bar{v}}^F$    $C_R^F$

20

$$\Delta \underline{\tilde{v}}^F = \begin{bmatrix} \Delta \tilde{v}_x^F \\ \Delta \tilde{v}_y^F \\ \Delta \tilde{v}_z^F \end{bmatrix}$$

$$\underline{v}_T^F = C_A^F (\alpha, \beta) \cdot \begin{bmatrix} |\underline{v}_T| \\ 0 \\ 0 \end{bmatrix} = \begin{bmatrix} u \\ v \\ w \end{bmatrix}$$

18

u   v   w

$$u(0) = u$$
$$v(0) = v$$
$$w(0) = w$$

26

u(0)   v(0)   w(0)

24

$$\hat{u} = u(0) + \Delta \tilde{v}_x^F \quad ; \quad u(0) = \hat{u}$$
$$\hat{v} = v(0) + \Delta \tilde{v}_y^F \quad ; \quad v(0) = \hat{v}$$
$$\hat{w} = w(0) + \Delta \tilde{v}_z^F \quad ; \quad w(0) = \hat{w}$$

28

$\hat{u}$   $\hat{v}$   $\hat{w}$

$\hat{\alpha}$

$\hat{\beta}$

$|\hat{\underline{v}}_T|$

$$\hat{\beta} = \arcsin \left[ \frac{\hat{v}}{(\hat{u}^2 + \hat{v}^2 + \hat{w}^2)^{1/2}} \right]$$

QUADRANTENLOGIK FÜR $\hat{\alpha}$

$$\hat{\alpha} = \arcsin \left[ \frac{\hat{w}}{(\hat{u}^2 + \hat{w}^2)^{1/2}} \right]$$

$$\hat{\alpha} = \arccos \left[ \frac{\hat{u}}{(\hat{u}^2 + \hat{w}^2)^{1/2}} \right]$$

$$|\hat{\underline{v}}_T| = (\hat{u}^2 + \hat{v}^2 + \hat{w}^2)^{1/2}$$

30

EP 0 358 204 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0179197 (BODENSEEWERK GERATETECHNIK GMBH) <br> * Ansprüche 1-4; Figuren 1-8 * <br> --- | 1, 2 | G05D1/06 <br> G05D1/08 <br> G01P5/00 |
| P | EP-A-0322532 (BODENSEEWERK GERATETECHNIK GMBH) <br> * Seite 3, Zeile 43 - Seite 5, Zeile 55; Figuren 1-3 * <br> --- | 1 | |
| D,A | EP-A-0263777 (BODENSEEWERK GERATETECHNIK GMBH) <br> * Seite 4, Zeile 43 - Seite 15, Zeile 30; Figuren 1-24 * <br> --- | 1 | |
| A | ZEITSCHRIFT FUR FLUGWISSENSCHAFTEN. <br> vol. 9, no. 6, 01 November 1985, BRAUNSCHWEIG DE Seiten 376 - 382; R.Brockhaus: <br> "Ein Vorschlag für die Wahl der Zustandsvariablen in der Bewegungsgleichungen von Flugzeugen unter Windeinfluss." <br> * Seite 376, Zeile 1 - Seite 382, Zeile 42; Figuren 1-3 * <br> --- | 1 | |
| P | WO-A-8810458 (AEROSPATIALE SOCIETE NATIONALE INDUSTRIELLE.) <br> * Seite 21, Zeile 9 - Seite 26, Zeile 19; Figuren 1-4 * <br> ----- | 1 | **RECHERCHIERTE SACHGEBIETE (Int. Cl.5)** <br><br> G05D <br> G01P <br> G01C |

Der vorliegende Recherchenbericht wurde für alle Patentansprüche erstellt

| Recherchenort | Abschlußdatum der Recherche | Prüfer |
|---|---|---|
| DEN HAAG | 13 OKTOBER 1989 | FOURRICHON P.M.L. |